(19) Europäisches Patentamt

European Patent Office

Office européen des brevets

(11) **EP 0 878 967 A2**

(12) **EUROPEAN PATENT APPLICATION**

(43) Date of publication:
**18.11.1998 Bulletin 1998/47**

(51) Int Cl.⁶: **H04N 7/50**

(21) Application number: **98303766.4**

(22) Date of filing: **13.05.1998**

(84) Designated Contracting States:
**AT BE CH CY DE DK ES FI FR GB GR IE IT LI LU MC NL PT SE**
Designated Extension States:
**AL LT LV MK RO SI**

(30) Priority: **14.05.1997 JP 124443/97**

(71) Applicant: **SONY CORPORATION**
**Tokyo 141 (JP)**

(72) Inventor: **Kato, Motoki, c/o Sony Corporation**
**Shinagawa-ku, Tokyo 141 (JP)**

(74) Representative: **Turner, James Arthur et al**
**D. Young & Co.,**
**21 New Fetter Lane**
**London EC4A 1DA (GB)**

(54) **Signal coding apparatus and method**

(57)     A signal coding apparatus and method, a signal recording medium and a signal transmitting method is disclosed in which a motion-picture image signal supplied at an input terminal is delivered to a motion vector detection/motion-prediction residual calculator, intra-image motion-prediction residual calculator, and to an frame/field DCT coding type judging means. In the frame/field DCT type judging means, the type of DCT coding is judged for the input MB (macro block). Based on the DCT coding type, the intra-image motion-prediction residual is calculated by the intra-image motion-prediction residual calculator. The intra-image motion-prediction residual thus obtained and input MB motion-prediction residual as compared with each other by the IN-TRA/INTER judging means to judge whether the input MB is to be intra- or inter-coded. The intra- or inter-coding is done in the decided coding mode.

FIG.8

## Description

The present invention relates to a signal coding apparatus and method, a signal recording medium, and a signal transmitting method.

Signal coding apparatus and methods, signal recording media, and signal transmitting methods are used for recording and reproducing a motion-picture image signal, for example, into and from a recording medium such as an optical disk, magnetic tape, etc. for display on a display unit, and also suitably applicable for transmission of a motion-picture image signal from a transmitting side to a receiving side via a transmission line as in a teleconferencing system (video conference system), picturephone system (visual telephone system), broadcasting system, etc.

Since a digital signal carries an extremely large amount of data, recording of digital video signals into a small-capacity recording medium for a long time, or transmitting them over many channels in a limited communication line, will need a means for coding the video signals at a high efficiency. To meet such a demand, it has been proposed to make use of a correlation between video signals, particularly motion-picture image signals, for attaining a high efficiency of coding such signals. MPEG (Motion-Picture Experts Group) is one of such data compression techniques. This is a standard proposal for data compression, reached through many discussions made among the associations ISO-IEC, JTC1, SC2 and WG 11. The MPEG is a hybrid data compression technique in which the motion-compensation predictive coding (which will be referred to as "inter-coding" hereafter) and the DCT (Discrete Cosine Transform) are effected in combination. With this MPEG technique, a motion from one frame to another of a motion-picture signal is first predicted, then a signal of a prediction residual is calculated to reduce a time base-directional redundancy and the residual signal is subjected to a discrete cosine transform (DCT) to reduce a space-axial redundancy, thereby attaining of a higher efficiency of video signal coding..

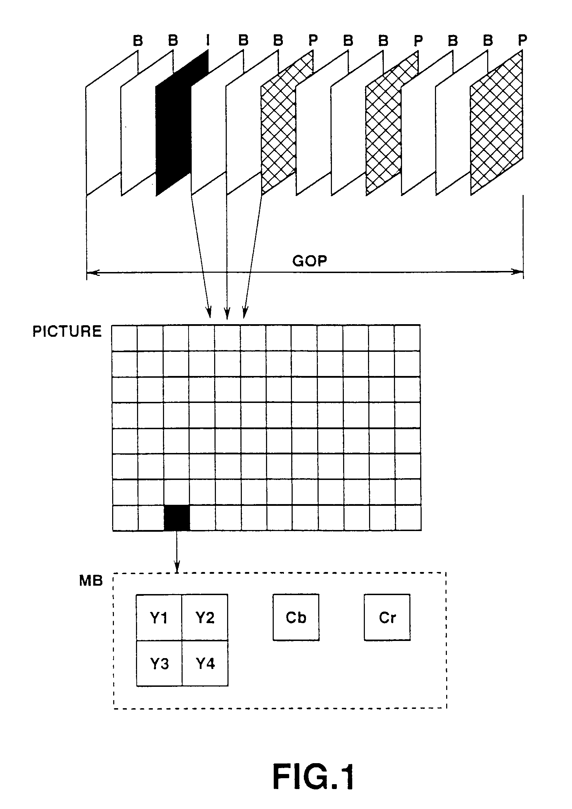

In the MPEG system schematically illustrated in FIG. 1, a video signal is compressed for coding with various pictures classified into three kinds: I, P and B. Of them, the I picture is intra-coded independently of the other pictures. The P pictures are forward coded for prediction. The predictive coding is done from the I or P pictures timewise positioned in the past. The B pictures are two-way coded for prediction. The predictive coding is done from forward, reverse or two-way pictures using an I or P timewise positioned before or after the B picture. The assembly of the pictures forms a GOP (Group Of Pictures). The individual pictures are divided into macro blocks (MB). In a format of 4:2:0, for example, one MB is composed of 6 blocks including four brightness blocks Y1, Y2, Y3 and Y4, and two chrominance blocks Cb and Cr spatially corresponding to each other. Each of the blocks consists of 64 pixels (8 lines each containing 8 pixels).

For the P and B pictures, the mode of coding can be switched between the intra-coding (intra-image predictive coding) and inter-coding (motion-compensation predictive coding, as having been described in the above) for each MB. P pictures can be inter-coded in only one mode, namely, in a forward predictive coding mode. B pictures can be done in three modes: forward, reverse and two-way, of which a most efficient one can be selected for inter-coding of the B pictures.

To judge which is optimum for coding an MB, intra- or inter-coding, it is ideal to try both the intra- and inter-coding modes and then take one of them whichever can be effected with transmission of minimum data. However, this will take much time or a large volume of calculation.

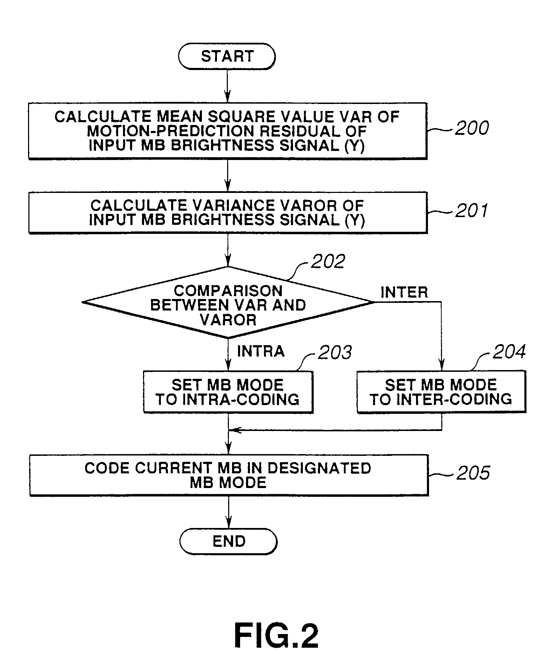

To avoid the above-mentioned problem, a simplified method for selection of intra- or inter-coding mode has been proposed. It is the MPEG Video Simulation Model 3 (ISO/IEC JTC1/SC2/WG11N0010 MPEG90/041 July 1990). This Simulation Model 3 (will be referred to simply as "Model 3" hereafter) is such that an efficiency of inter-coding is estimated from a motion-compensation prediction residual while an efficiency of intra-coding is estimated from an intra-MB prediction residual to compare the motion-compensation prediction residual and intra-MB prediction residual, thereby deciding which is to be selected, intra- or inter-coding. This method will be further explained with reference to the flow chart shown in FIG. 2.

At Step 200 in FIG.2, a mean square value VAR of motion-prediction residual signal of 16×16 pixels of a brightness signal of an input MB (macro block) is calculated. More particularly, a mean square value is determined of a difference between an input MB signal A[i, j] and a predicted MB signal F[x+i, y+1] to which a reference is made by a motion vector (x, y), as defined by the following:

$$VAR = [\Sigma(A[i, j] - F[x+i, y+j])^2]/256$$

$$(i = 0{\sim}15, j = 0{\sim}15) \tag{1}$$

It should be noted that an absolute value may be used for the square value.

At Step 201, a variance VAROR of 16×16 pixels of a brightness signal is calculated as an intra-MB prediction residual of an input MB from the following relation:

$$VAROR=(\Sigma(A[i,j]^2)/$$

$$256 \cdot MEAN^2 \ (i = 0 \sim 15, j = 0 \sim 15) \tag{2}$$

$$MEAN = (\Sigma A[i, j]/256 \tag{3}$$

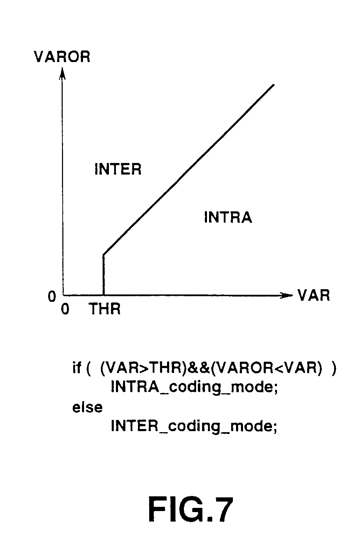

At Step 202, the above values VAR and VAROR are compared with each other on the basis of the characteristic curve shown in FIG. 7. That is to say, when VAR> THR and VAROR < VAR, intra-coding (INTRA) is selected for the input MB (at Step 203). Otherwise, inter-coding (INTER) is selected for the MB (at Step 204). The "THR" is a threshold and THR = 64, for example.

At Step 205, the MB coding is done in a designated mode. For intra-coding, the MB is decomposed into blocks. For inter-coding, a prediction residual MB is decomposed into blocks. Each of the blocks is subjected to an 8×8 DCT coding.

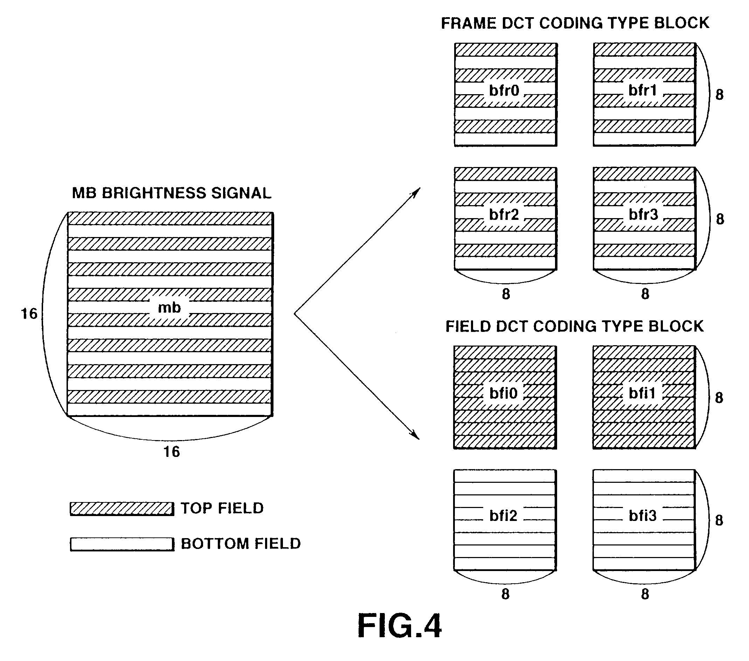

It should be noted that in MPEG2, two types of DCT coding are available: Field and Frame. One of them can be selected for each MB. FIG. 4 shows a relation between an MB brightness signal and blocks in each of DCT coding modes. Each block is a unit of 8×8 DCT coding. In the frame type of DCT coding, an MB brightness signal is decomposed into 4 blocks for each block. On the other hand, in the field type of DCT coding, the MB brightness signal is decomposed so that each block is formed from fields.

In the above-mentioned Model 3, a variance of a brightness signal of 16×16 pixels in size is calculated to estimate an efficiency of intra-coding. In this method, however, it is not possible to estimate an efficiency of coding in each of two types of DCT coding. That is to say, it has been evident that the Model 3 is apt to erroneously select an inefficient mode of coding more often than the ideal method of coding-mode selection having been described as to the conventional example in which both the intra- and inter-coding modes are tried actually and then one of them which can be effected with transmission of less data.

Also in the above-mentioned Model 3, a variance of a brightness signal of 16×16 pixels is calculated to estimate an efficiency of intra-coding. However, this method is not satisfactory for estimation of en efficiency of 8×8 DCT coding for each block. That is to say, it has been proved that the Model 3 erroneously selects an inefficient mode of coding more frequently than the ideal method of coding-mode selection having been described as to the conventional example.

Various respective aspects and features of the invention are defined in the appended claims.

Embodiments of the present invention can alleviate or overcome the above-mentioned drawbacks of the prior art by providing a signal coding apparatus and method, a signal recording medium and a signal transmitting method, in which the Model 3 is improved for a higher efficiency of coding.

In embodiments of the invention a selection is made, for an input picture image signal, either an intra-coding in which an input picture image signal is decomposed into blocks each of which is a unit of coding and subjected to an orthogonal transform or an inter-coding in which a motion between frames of the input picture image signal is predicted and a residual signal as a result of the prediction is decomposed into blocks each of which is subjected to an orthogonal transform, through judgment of whether the orthogonal transform is to be done with the block to be coded is formed from fields or frames.

The above decision of either the intra- or inter-coding is preferably made by calculating, by a predetermined method, a sum of intra- image prediction residuals of each block, and comparing the intra-image prediction residual and the motion-prediction residual of the input picture image signal to thereby judge, based on the decided type of orthogonal transform, whether the input picture image signal is to be intra- or inter-coded.

The block used in the above procedure may have a size of 8×8 pixels, for example, and the intra-image prediction residual of the block may be calculated by calculating a sum of the absolute values of differences in pixel size from the mean values of the blocks or by calculating a sum of squares of differences in pixel size from the mean value of the blocks.

According to embodiments of the present invention, either an intra-coding in which an input picture image signal is decomposed into blocks each of which is a unit of coding and subjected to an orthogonal transform or an inter-coding in which a motion between frames of the input picture image signal is predicted and a residual signal as a result of the prediction is decomposed into blocks each of which is subjected to an orthogonal transform, is selected for each input picture image signal, through judgment of whether the orthogonal transform is to be done with the block to be coded is formed from fields or frames. Thus, an input picture image signal can be coded with an improved efficiency.

Either the intra- or inter-coding can be selected by calculating, by a predetermined method, a sum of intra- image prediction residuals of each block, and comparing the intra-image prediction residual and the motion-prediction residual of the input picture image signal to thereby judge, based on the decided type of orthogonal transform, whether the input picture image signal is to be intra- or inter-coded.

Therefore, a more efficient mode of coding, intra- or inter-coding, of an input picture image signal can be selected than with the conventional techniques, which permits to implement a signal coding apparatus and method having an improved efficiency of coding.

By recording signals thus efficiently coded, a high availability recording medium can be provided, and a high efficiency signal transmission can be attained through transmission of thus efficiency coded signals.

The invention will now be described by way of example with reference to the accompanying drawings, throughout which like parts are referred to by like references, and in which:

FIG. 1 is a drawing showing the relationship among MPEG GOP, picture, MB and blocks;

FIG. 2 is a flow chart for explanation of the conventional algorithm for judging whether an input MB is to be intra- or inter-coded;

FIG. 3 is a schematic block diagram of the motion-picture image coding apparatus according to the present invention;

FIG. 4 illustrates relationships between an MB brightness signal and a block of the frame type of DCT coding, and that of the field type of DCT coding;

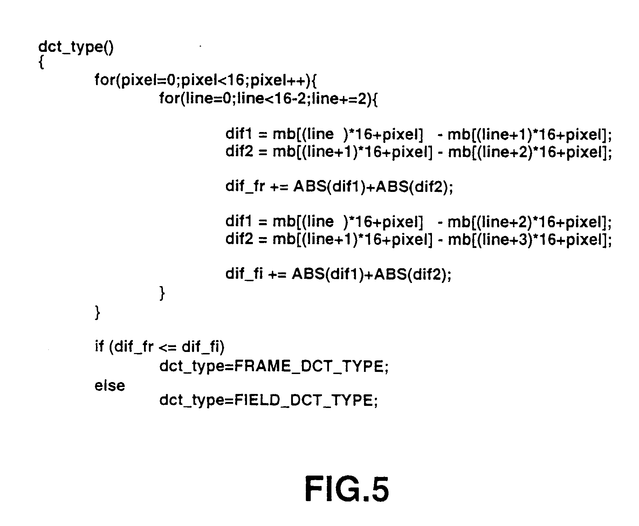

FIG. 5 illustrates a program for explanation of how to judge whether the DCT coding is of the frame type or of the field type;

FIG. 6 shows a program for explanation of an example of calculation of intra-image prediction residual VAROR in an input MB, according to the present invention;

FIG. 7 illustrates a characteristic of the present invention for judging whether an input MB is to be intra- or inter-coded through comparison between an intra-image prediction residual VAROR in an input MB and a motion prediction residual VAR in the input MB; and

FIG. 8 is a flow chart for explanation of an algorithm for judging whether input MB coding is to be in intra-coding or inter-coding mode, according to the embodiment of the present invention.

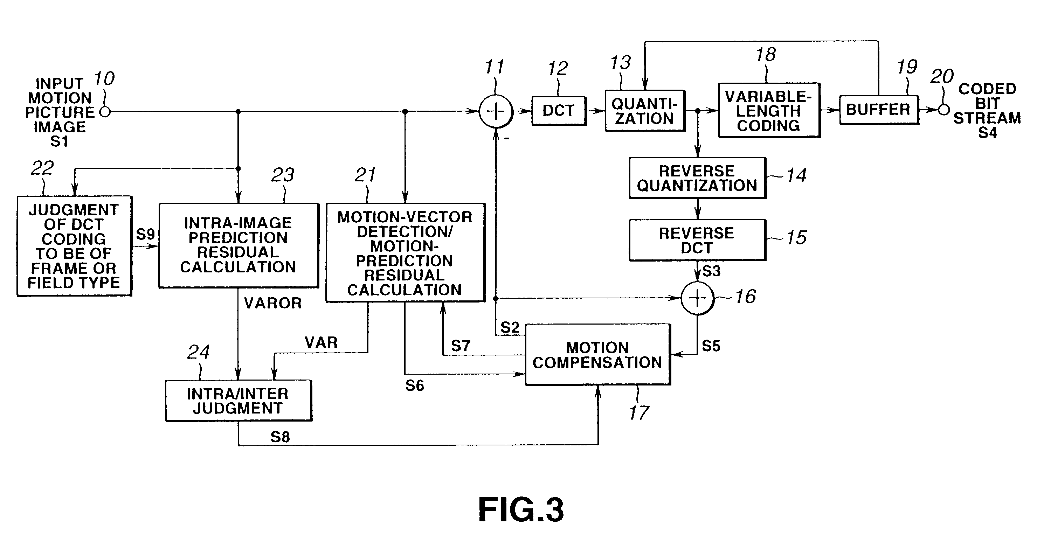

FIG. 3 schematically illustrates, in the form of a block diagram, an example of the configuration of the motion-picture coding apparatus incorporating a motion-picture coding method. As shown, a motion-picture image signal S1 supplied at a terminal 10 is passed through an calculator 11 which provides a prediction residual to a DCT coder composed of a DCT circuit 12, quantization circuit 13, reverse quantization circuit 14, reverse DCT circuit 15, calculator 16 and a motion compensation circuit 17. The DCT coder will be further described later.

Also the motion-picture image signal S1 supplied at the terminal 10 will be supplied to a motion vector detection/ motion-prediction residual calculation circuit 21. In this circuit 21, a pattern matching is done between a reference frame and an input MB (macro block) brightness signal to detect a motion vector of the input MB. That is to say, a sum of absolute value Ef of a difference is determined between the input MB brightness signal $A[i, j]$ and an MB brightness signal $F[x+i, y+j]$ to which a reference is made by an arbitrary motion vector $(x, y)$, based on the following relation (3):

$$Ef = \Sigma \, |A[i, j] - F[x+i, y+j]| \ (i = 0 \sim 15, \ j = 0 \sim 15) \tag{3}$$

It should be noted that the reference frame signal should preferably be an input motion-picture image signal S1 of an original image but that a locally decoded frame signal stored in a frame memory in the motion compensation circuit 17 may be used instead. In this case, however, a reference frame signal S7 is supplied from the motion compensation circuit 17 to the motion vector detection/motion-prediction residual calculation circuit 21. The circuit 21 will take as a motion vector of a current MB a coordinate $(x, y)$ in which the above Ef is the smallest and deliver the standing Ef value as a motion-prediction residual VAR of the motion vector S6.

The motion-picture image signal S1 is also supplied to a circuit 22 for judgment of DCT coding to be of the frame or field type in which each block is composed of fields.

FIG. 4 shows a relation between an MB brightness signal and blocks in each of the types of DCT coding. Each block is a unit of 8×8 DCT coding. In the frame type of DCT coding, an MB brightness signal is decomposed into 4 blocks for each block. In the field type of DCT coding, however, the signal is decomposed so that each block is formed from fields.

An example of a program showing how to judge whether the DC coding is of the frame or field type will be discussed with reference to FIG. 4. First, a sum dif_fr of absolute values of difference between pixels vertically adjacent to each other in a frame and a sum of absolute values dif-fi of differences between pixels vertically adjacent to each other in a field, are calculated for a 16×16 pixel brightness signal of the input MB. Next, when the value dif_fr is smaller than dif-fi, the DCT coding is of the frame type. In other cases, the DCT coding is of the field type. Then the circuit 22 will provide a DCT coding type S9 to an intra-image prediction residual calculator 23.

The motion-picture image signal S1 is supplied to the intra-image motion-prediction residual calculator 23 where an intra-image motion-prediction residual VAROR of the input MB is calculated based on motion-prediction residual in blocks of the frame and field types of DCT coding in the current MB.

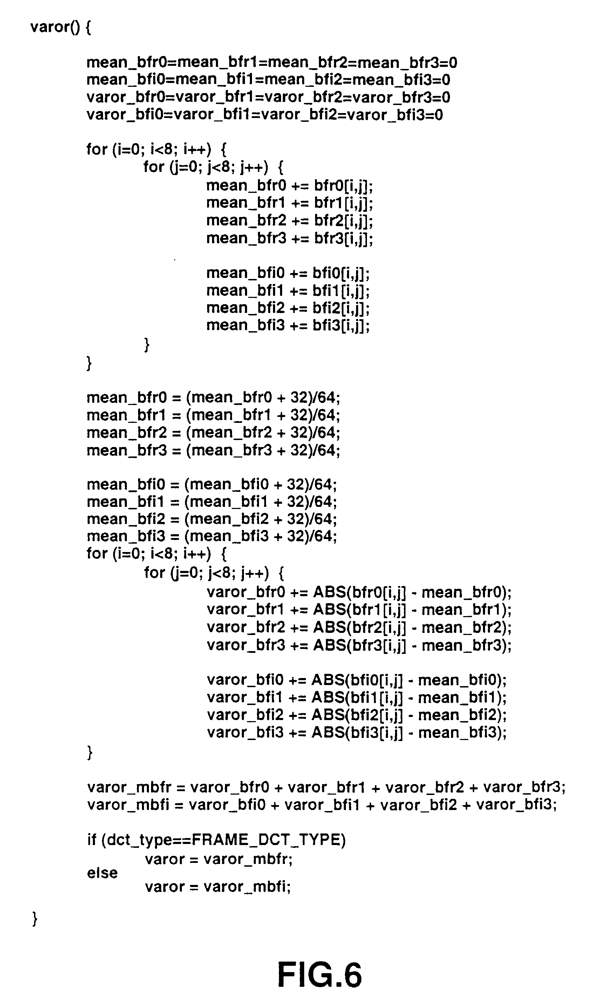

FIG. 6 shows an example of a VAROR calculation program. In this program shown in FIG. 6, blocks of the frame type of DCT coding of the input MB brightness signal are bfr0[i, j], bfr1[i, j], bfr2[i, j] and bfr3[i, j] while blocks of the field type of DCT coding are bfi0[i, j], bfi1[i, j], bfi2[i, j] and bfi3[i, j] where i is an index of horizontal pixels and i = 0~7 and j is an index of vertical pixels and j = 0~7. Absolute sum of differences in pixel size are calculated from mean values of the blocks for motion-prediction residuals in the respective blocks. The intra-picture image motion-prediction residual VAROR_mbfr attained when the DCT coding is of the frame type is taken as a sum of motion-prediction residuals in four blocks of the frame type of DCT coding while the intra-block image motion-prediction residual VAROR-mbfi is taken as a sum of motion-prediction residuals in four blocks of the field type of DCT coding. When the DCT coding (signal S9 supplied from the circuit 22) is of the frame type, VAROR_mbfr is taken as VAROR while the DC T coding is of the field type, VAROR_mbfi is taken as VAROR. The intra-MB motion-prediction residual calculator 23 will provide the VAROR value.

Some variants of the algorithm shown in FIG.6 will be explained herebelow. For calculation of the intra-block motion-prediction residual, a square sum may be calculated for the absolute sum. In this case, the above formula (3) should also be calculated using the square sum in place of the absolute value.

When absolute sum of differences in pixel size are calculated from mean values of the blocks, the sum may be calculated as follows;

mean_mb = (mean_bfr0 + mean_bfr1 + mean_bfr2 +
mean+bfr0 = mean_bfr1 = mean_bfr2 = mean_bfr3 = mean_mb
mean_top = (mean_bfi0 +
mean_bottom = (mean_bfi2 +
mean_bf10 = mean_bfi1 = mean_top
mean_bfi2 = mean bfi3 = mean_bottom

where mean_x is a mean value of x.

Also, the above mean_mb may be taken as a mean value of $16 \times 16$ pixels of the input MB brightness signal. The above mean_top may be taken as a mean value of the $16 \times 8$ pixels in the top field of the input MB brightness signal while the above mean_bottom may be taken as a mean value of $16 \times 8$ pixels in the bottom field of the input MB brightness signal.

There is also provided an intra/inter (INTRA/INTER) judgment circuit 24 which judges, based on the above-mentioned VAR and VAROR values of the input MB, whether the MB is to be intra- or inter-coded. An example of this judgment is shown in FIG.7. As shown, when VAR > THR (THR is a predetermined threshold) and VAROR < VAR, the INTRA/INTER judgement circuit 24 will provide an MB mode S8 to the motion compensation circuit 17.

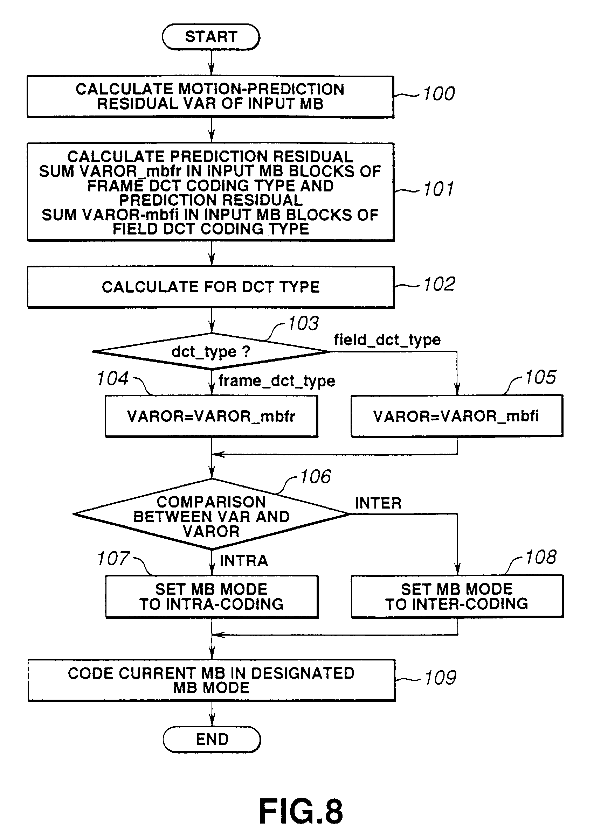

A flow chart of the operations under an algorithm to judge whether the above-mentioned input MB is to be intra- or inter-coded is shown in FIG. 8.

As seen, a motion-prediction residual VAR of $16 \times 16$ pixels of the input MB brightness signal is calculated at Step 100. A sum VAROR-mbfr of intra-block motion-prediction residuals of the blocks of the frame type of DCT coding, and a sum VAROR_mbfi of intra-block motion-prediction residuals of the blocks of the field type of DCT coding, are calculated at a next Step 101. At Step S102, it is judged whether the DCT coding for the input MB is of the frame or field. Any of these Steps S101 and 102 may be done first.

At Step S103, when the DCT coding is of the frame type, VAROR_mbfr is used as VAROR (at Step S104) while VAROR-mbfi is used as VAROR when the DCT coding is of the field type (at Step S105).

At Step S106, it is judged based on VAR and VAROR whether the MB mode of the input MB is to be INTRA (at Step S107) or INTER (at Step S108).

At Step S109, the input MB is coded in a predetermined MB mode. For the intra-coding, the input MB is decomposed into blocks in a designed type of DCT coding. For the inter-coding, the motion-prediction residual NIB is decomposed into blocks in the designated type of DCT coding. Each block is subjected to an 8×8 pixel DCT coding.

Thereby it is possible to select a coding mode of a higher efficiency than ever during judgment of whether an input MB is to be intra- or inter-coded. Thus, a motion-picture coding method and apparatus can be implemented which can attain a further higher efficiency of coding.

Referring now back to FIG. 3, a process of coding after an MB mode S8 of an input MB is decided will be described in detail:

The motion compensation circuit 17 has a picture image memory to store locally decoded images as reference picture image for motion compensation. When the MB mode S8 is INTER, the motion compensation circuit 17 will read a predicted MB signal S2 from the picture image memory based on a motion vector S6. The calculator 11 will take the input MB signal of an input motion-picture image S1 as an addition signal and make an addition taking as a subtraction signal the motion-predicted MB signal S2 from the motion compensation circuit 17 to calculate a difference between the above input MB signal and motion-predicted MB signal and deliver it as a motion-predicted residual MB signal. On the other hand, when the MB mode S8 is INTRA, no prediction will be done and the input MB signal be delivered from the calculator 11.

The motion-prediction residual MB signal from the calculator 11 (input MB signal when the MB mode S8 is INTRA) is sent to the DCT circuit 12. In this circuit 12, the motion-prediction MB signal is decomposed into blocks according to a designated type of DCT coding, and each of the blocks is subjected to an 8×8 pixel DCT (discrete code transform). In a quantization circuit 13, a DCT factor provided from the DCT circuit will be quantized in a predetermined step size according to a bit duty factor of a buffer 19. A quantized output signal from the quantization circuit 13 is sent to the reverse quantization circuit 14 and a variable-length coding circuit 18.

In the reverse quantization circuit 14, the quantized output signal from the quantization circuit 13 is subjected to a reverse quantization corresponding to the quantization having been done in the quantization circuit 13. The output of the reverse quantization circuit 14 is supplied to the reverse DCT circuit 15 where it is subjected to a reverse DCT to decode the motion-prediction residual NIB signal which will be delivered to the calculator 16. The calculation 16 will also have been supplied with a same signal as the motion-predicted MB signal S2 supplied to the calculator 11. The calculator 16 will add the motion-predicted MB signal S2 to the decoded motion-prediction residual MB signal. Thus, a locally decoded motion-predicted picture image signal will be provided. The locally decoded motion-picture image signal is stored into the image memory of the motion compensation circuit 17 where it will be used as a reference image for a next motion compensation.

On the other hand, the variable-length coding circuit 18 will make a Huffman coding of an output signal, quantized step size, motion vector from the quantization circuit 13 to provide a bit stream based on the syntax of the ISO/IEC 13828-2 (MPEG2 video). The bit stream will be supplied to the buffer memory 19 provided to smooth a bit rate of the bit stream S6 received from an output terminal 20. Also, when the buffer memory 19 is about to overflow, it is fed back as a quantization information to the quantization circuit 13. At this time, the quantization step is enlarged in the quantization circuit 13, whereby the amount of the information delivered from the quantization circuit 13 is reduced. The bit stream of the coded signals delivered from the output terminal 20 will be recorded into a signal recording medium such as a disk, tape, etc. or transmitted over a transmission line.

As having been described in the foregoing, the embodiment of the motion-picture image coding apparatus according to the present invention having an inter-coding means for predicting a motion between frames of an input motion-picture image signal, decomposing a resulted motion-prediction residual signal into blocks, and making an orthogonal transform such as DCT of each of the blocks, and an intra-coding means for decomposing an input motion-picture image signal itself into blocks and making an orthogonal transformation of each of the blocks, comprising (a) means for judging the mode of the orthogonal transform to form the block from frames or fields (the circuit 22 for judgment of whether the DCT coding is of the frame type or of the field type), and (b) means for controlling the method of judging based on the above decided orthogonal transform mode whether the input motion-picture image signal is to be intra- or inter-coded (the intra-image motion-prediction residual calculator 23 and INTRA/INTER judgment circuit 24).

The above means (a) calculates, by a predetermined method, a sum of intra-picture image prediction residuals of each block, based on the type of orthogonal transform decided by the means (b) for comparison of the intra-image motion-prediction residual and a motion-prediction residual of the input picture image, thereby judging whether the input picture image signal is to be intra- or inter-coded, and comparing the intra-image prediction residual and the motion-prediction residual of the input picture image.

The above-mentioned block used in the above procedure may have a size of 8×8 pixels, and the intra-image prediction residual of the block is calculated by calculating a sum of the absolute values of differences in pixel size from the mean value of the blocks or calculating a sum of squares of differences in pixel size from the mean value of the blocks.

Therefore, a more efficient mode of coding, intra- or inter-coding, of an input picture image signal, can be selected than with the conventional techniques, which permits to implement a signal coding apparatus and method having an improved efficiency of coding.

It should be noted that the present invention is not limited only to the aforementioned embodiment. That is, it is not limited to a digital signal such as a motion-picture image signal of the MPEG type, for example, but it may also be applied to various digital motion-picture image signals, etc. resulted from coding of an intra-/inter-coding and orthogonal transform in combination. Of course, the present invention may be modified in various forms without departing from the scope (defined by the claims set forth later) of the present invention.

**Claims**

1. A signal coding apparatus, comprising:

a coding means for selecting either an intra-coding in which an input picture image signal is decomposed into blocks each of which is a unit of coding and subjected to an orthogonal transform or an inter-coding in which a motion between frames of an input picture image signal is predicted and a resulted prediction residual signal is decomposed into blocks each of which is subjected to an orthogonal transform;

a coding type judging means for judging whether the orthogonal transform is to be of a type in which the coded block is formed from frames or fields; and

a controlling means for controlling, based on the decided type of orthogonal transform, whether the input picture image signal is to be intra- or inter-coded.

2. The apparatus as set forth in Claim 1, wherein the controlling means comprises:

an intra-image motion-prediction residual calculating means for calculating a sum of intra-picture image motion-prediction residuals in each block based on the type of orthogonal transform decided by the coding-type judging means; and

an INTRA/INTER judging means for comparing the intra-picture image motion-prediction residual and motion-prediction residual of the input picture image signal to judge whether the input picture image signal is to be intra- or inter-coded.

3. The apparatus as set forth in Claim 1, wherein the intra-image motion-prediction residual in the block is determined by calculating an absolute value of the pixel differences from the mean value of the blocks.

4. The apparatus as set forth in Claim 1, wherein the intra-image motion-prediction residual in the block is determined by calculating a square sum of pixel differences from the mean value of the blocks.

5. A signal coding method, comprising the steps of:

effecting an inter-coding in which a motion is predicted between frames of an input motion-picture signal, a resulted prediction residual signal is decomposed into blocks and each block is subjected to an orthogonal transform such as DCT,

effecting an intra-coding in which an input motion-picture image signal is directly decomposed into blocks and of the blocks is subjected to an orthogonal transform;

judging the orthogonal transform in which the block is to be formed from frames or fields; and

controlling the method of judging, based on the decided type of orthogonal transform, whether the input picture image signal is to be intra- or inter-coded.

6. The method as set forth in Claim 5, further comprising the steps of:

calculating a sum of intra-picture image motion-prediction residuals in each block based on the type of orthogonal transform decided by a coding type judging means; and

judging whether the input picture image signal is to be intra- or inter-coded, though comparison between the intra-picture image motion-predication residual and the motion-prediction residual of the input picture image signal.

7. A signal recoding medium for recording coded signals, wherein the signals have been coded by:

effecting an inter-coding in which a motion is predicted between frames of an input motion-picture signal, a resulted prediction residual signal is decomposed into blocks and each block is subjected to an orthogonal transform including DCT,

effecting an intra-coding in which an input motion-picture image signal is directly decomposed into blocks and of the blocks is subjected to an orthogonal transform; and

the coding is controlled by judging whether the input motion-picture signal is intra- or inter-coded based on a result of judgement of whether the block is composed of frames or fields in an orthogonal transform.

8. A signal transmitting method, comprising the steps of:

effecting an inter-coding in which a motion is predicated between frames of an input picture image signal, a resulted prediction residual signal is decomposed into blocks and each of the blocks is subjected to an orthogonal transform including DCT;

effecting an intra-coding in which an input picture image signal is directly decomposed into blocks and each of the blocks is subjected to an orthogonal transform;

judging the type of orthogonal transform in which the block is to be formed from frames or fields;

controlling the method of judging, based on the decided type of orthogonal transform, whether the input picture image signal is to be intra- or inter-coded; and

transmitting a coded data thus produced.

9. The method as set forth in Claim 8, wherein the controlling steps comprises:

calculating a sum of intra-image motion-prediction residuals in each block based on the type of orthogonal transform decided by a coding type judging means; and

judging whether the input picture image signal is to be intra or inter-coded, through comparison between the intra-image motion-prediction residual and the picture signal motion-prediction residual.

FIG.1

```
           ┌─────────┐
           │  START  │
           └─────────┘
                │
                ▼
    ┌─────────────────────────────────┐
    │ CALCULATE MEAN SQUARE VALUE VAR OF │ ~200
    │ MOTION-PREDICTION RESIDUAL OF      │
    │ INPUT MB BRIGHTNESS SIGNAL (Y)     │
    └─────────────────────────────────┘
                │
                ▼
    ┌─────────────────────────────────┐
    │ CALCULATE VARIANCE VAROR OF        │ ~201
    │ INPUT MB BRIGHTNESS SIGNAL (Y)     │
    └─────────────────────────────────┘
                │
                ▼          ~202
              ╱──────────────╲        INTER
            ╱   COMPARISON     ╲────────────┐
           ╱  BETWEEN VAR AND    ╲           │
            ╲    VAROR          ╱            │
              ╲──────────────╱              │
                │                            │
            INTRA │  ~203                ~204 │
                ▼                            ▼
    ┌──────────────────┐        ┌──────────────────┐
    │ SET MB MODE       │        │ SET MB MODE       │
    │ TO INTRA-CODING   │        │ TO INTER-CODING   │
    └──────────────────┘        └──────────────────┘
                │◄───────────────────────────┘
                ▼
    ┌─────────────────────────────────┐
    │ CODE CURRENT MB IN DESIGNATED      │ ~205
    │ MB MODE                            │
    └─────────────────────────────────┘
                │
                ▼
           ┌─────────┐
           │   END   │
           └─────────┘
```

# FIG.2

**FIG.3**

EP 0 878 967 A2

FRAME DCT CODING TYPE BLOCK

bfr0

bfr1

8

bfr2

bfr3

8

8          8

MB BRIGHTNESS SIGNAL

16

mb

16

FIELD DCT CODING TYPE BLOCK

bfi0

bfi1

8

bfi2

bfi3

8

8          8

TOP FIELD

BOTTOM FIELD

FIG.4

```
dct_type()
{
        for(pixel=0;pixel<16;pixel++){
                for(line=0;line<16-2;line+=2){

                        dif1 = mb[(line  )*16+pixel]   - mb[(line+1)*16+pixel];
                        dif2 = mb[(line+1)*16+pixel] - mb[(line+2)*16+pixel];

                        dif_fr += ABS(dif1)+ABS(dif2);

                        dif1 = mb[(line  )*16+pixel]   - mb[(line+2)*16+pixel];
                        dif2 = mb[(line+1)*16+pixel] - mb[(line+3)*16+pixel];

                        dif_fi += ABS(dif1)+ABS(dif2);
                }
        }

        if (dif_fr <= dif_fi)
                dct_type=FRAME_DCT_TYPE;
        else
                dct_type=FIELD_DCT_TYPE;
```

# FIG.5

```
varor() {

        mean_bfr0=mean_bfr1=mean_bfr2=mean_bfr3=0
        mean_bfi0=mean_bfi1=mean_bfi2=mean_bfi3=0
        varor_bfr0=varor_bfr1=varor_bfr2=varor_bfr3=0
        varor_bfi0=varor_bfi1=varor_bfi2=varor_bfi3=0

        for (i=0; i<8; i++) {
                for (j=0; j<8; j++) {
                        mean_bfr0 += bfr0[i,j];
                        mean_bfr1 += bfr1[i,j];
                        mean_bfr2 += bfr2[i,j];
                        mean_bfr3 += bfr3[i,j];

                        mean_bfi0 += bfi0[i,j];
                        mean_bfi1 += bfi1[i,j];
                        mean_bfi2 += bfi2[i,j];
                        mean_bfi3 += bfi3[i,j];
                }
        }

        mean_bfr0 = (mean_bfr0 + 32)/64;
        mean_bfr1 = (mean_bfr1 + 32)/64;
        mean_bfr2 = (mean_bfr2 + 32)/64;
        mean_bfr3 = (mean_bfr3 + 32)/64;

        mean_bfi0 = (mean_bfi0 + 32)/64;
        mean_bfi1 = (mean_bfi1 + 32)/64;
        mean_bfi2 = (mean_bfi2 + 32)/64;
        mean_bfi3 = (mean_bfi3 + 32)/64;
        for (i=0; i<8; i++) {
                for (j=0; j<8; j++) {
                        varor_bfr0 += ABS(bfr0[i,j] - mean_bfr0);
                        varor_bfr1 += ABS(bfr1[i,j] - mean_bfr1);
                        varor_bfr2 += ABS(bfr2[i,j] - mean_bfr2);
                        varor_bfr3 += ABS(bfr3[i,j] - mean_bfr3);

                        varor_bfi0 += ABS(bfi0[i,j] - mean_bfi0);
                        varor_bfi1 += ABS(bfi1[i,j] - mean_bfi1);
                        varor_bfi2 += ABS(bfi2[i,j] - mean_bfi2);
                        varor_bfi3 += ABS(bfi3[i,j] - mean_bfi3);
        }

        varor_mbfr = varor_bfr0 + varor_bfr1 + varor_bfr2 + varor_bfr3;
        varor_mbfi = varor_bfi0 + varor_bfi1 + varor_bfi2 + varor_bfi3;

        if (dct_type==FRAME_DCT_TYPE)
                varor = varor_mbfr;
        else
                varor = varor_mbfi;

}
```

# FIG.6

14

```
if ( (VAR>THR)&&(VAROR<VAR) )
      INTRA_coding_mode;
else
      INTER_coding_mode;
```

# FIG.7

START

CALCULATE MOTION-PREDICTION
RESIDUAL VAR OF INPUT MB — 100

CALCULATE PREDICTION RESIDUAL
SUM VAROR_mbfr IN INPUT MB BLOCKS OF
FRAME DCT CODING TYPE AND
PREDICTION RESIDUAL
SUM VAROR-mbfi IN INPUT MB BLOCKS OF
FIELD DCT CODING TYPE — 101

CALCULATE FOR DCT TYPE — 102

103
dct_type ?

field_dct_type

104 — frame_dct_type

VAROR=VAROR_mbfr

105
VAROR=VAROR_mbfi

106
COMPARISON
BETWEEN VAR AND
VAROR

INTER

107 — INTRA

SET MB MODE
TO INTRA-CODING

108
SET MB MODE
TO INTER-CODING

CODE CURRENT MB IN DESIGNATED
MB MODE — 109

END

# FIG.8